# EUROPÄISCHE PATENTSCHRIFT

(11) **EP 1 862 376 B1**
(45) Veröffentlichungstag und Bekanntmachung des Hinweises auf die Patenterteilung: **14.03.2012**
(21) Anmeldenummer: 07010546.5
(22) Anmeldetag: 26.05.2007
(51) Int. Cl.: B62D 15/02

(54) **Verfahren zur Steuerung eines Einparkvorgangs**
Method for controlling the parking process
Procédé destiné à contrôler la procédure de parking

(30) Priorität: 03.06.2006 DE 102006026092
(43) Veröffentlichungstag der Anmeldung: 05.12.2007
(73) Patentinhaber: Bayerische Motoren Werke Aktiengesellschaft, 80809 München (DE)
(72) Erfinder: Augst, Alexander, 80937 München (DE)

(56) Entgegenhaltungen:
- EP-A- 1 500 950
- EP-A- 1 502 815
- EP-A- 1 642 808

## Beschreibung

Die Erfindung betrifft ein Verfahren zur Steuerung eines zumindest teilautomatisch durchführbaren Einparkvorgangs, durch welchen ein Kraftfahrzeug von einer Istposition in eine Sollposition verbringbar ist.

Aus dem Stand der Technik sind verschiedenste Verfahren zur voll- oder teilautomatischen Durchführung von Einparkvorgängen für Kraftfahrzeuge bekannt, bei welchen das jeweilige Kraftfahrzeug von einer Istposition in eine Sollposition verbracht werden soll.

Bekannt ist es beispielsweise, etwa aus der DE 10 2004 018 205 A1, einem Bediener eines Kraftfahrzeugs zur Unterstützung ein Bild der Fahrzeugumgebung anzuzeigen, welches beispielsweise von einer am Heck des Kraftfahrzeuges angeordneten Kamera erfasst wird, und in dieses Umgebungsbild Orientierungshilfen (Linien, halbtransparente Flächen, Texthinweise) einzublenden, die dem Fahrer die Orientierung und Einschätzung des erforderlichen Rangierraums, Parklückengröße etc. erleichtern. Solche Orientierungshilfen können beispielsweise dazu dienen, den Fahrer zu unterstützen, sein Kraftfahrzeug auf einer durch eine Wegeplanung von der Istposition zur Sollposition gewonnenen Trajektorie in eine Parklücke zu steuern. Zur Anzeige wird typischerweise ein Bildschirm im Kraftfahrzeuginneren verwendet.

Aus der EP 1 502 815 A1 ist eine Fahrhilfsvorrichtung für ein Fahrzeug bekannt mit einer Kamera zur Überwachung eines Fahrraums, mit einem Lenkwinkelsensor zur Erfassung der eingeschlagenen Lenkrichtung des Fahrzeugs und mit einer Anzeige zur Darstellung des Fahrraums und zur Darstellung eines von dem eingeschlagenen Lenkwinkel abhängigen Fahrschlauchs des Fahrzeugs in dem Fahrraum. Die Fahrhilfsvorrichtung aus der EP 1502815 A1 zeichnet sich aus durch weitere, in der Anzeige angezeigte, auf einen Teilausschlag der Lenkung bezogene Hilfslinien und/oder Hilfsbaender zur seitlichen Begrenzung mindestens einen virtuellen Fahrschlauchs.

Es ist auch bekannt, ein Umgebungsbild aus Bildern zusammenzusetzen, die von mehreren Kameras aufgenommen werden und/oder die Perspektive der Darstellung durch geeignete Bildverarbeitung gegenüber der Perspektive der Bildaufnahme zu verändern. So kann dem Fahrer beispielsweise, wie aus der DE 197 41 896 A1 bekannt, ein Umgebungsbild aus der Vogelperspektive dargestellt werden, in dem auch ein Abbild des eigenen Kraftfahrzeugs enthalten sein kann.

Bekannt sind auch Verfahren, etwa aus der DE 103 24 188 A1, die eine sensorbasierte Erfassung bzw. Vermessung von freien Parklücken erlauben. Einen Schwerpunkt vieler solcher Verfahren stellt eine Vermessung der Umgebung des Kraftfahrzeuges, insbesondere in der Umgebung vorhandener Parklücken, mit Abstandssensoren (z.B. Ultraschall) und/oder anderer Umfeldsensorik dar.

Die EP 1500 950 A2 ist als nächstliegender Stand der Technik nach der Oberbegriff des Anspruchs 1 zu sehen und beschreibt ein Parkunterstützungerät bzw. -verfahren für ein Kraftfahrzeug, bei welchem ein Bild der Umgebung des Kraftfahrzeugs durch eine Anzeigeeinheit im Inneren des Kraftfahrzeugs dargestellt wird, bei welchem in dem Umgebungsbild ein Virtuelles Zielobjekt dargestellt wird, dessen Bildposition im Umgebungsbild einer Zielposition für das Kraftfahrzeug in der Umgebung des Kraftfahrzeugs entspricht, bei welchem in Abhängigkeit von Bedienaktionen eines Bedieners des Kraftfahrzeugs die Bildposition des Zielobjekts in dem Umgebungsbild verändert wird und bei welchem durch eine Auswahlaktion des Bedieners die veränderte Bildposition des Zielobjekts ausgewählt wird und eine der veränderten Bildposition des Zielobjekts entsprechende veränderte Zielposition für das Kraftfahrzeug als Sollposition des Einparkvorgangs übernommen wird.

Neuere Verfahren, vgl. DE 10 2005 017 359 A1, erlauben ein teil- oder vollautomatisches Einparken in eine sensorbasiert erfasste Parklücke. Die Automatisierung betrifft dabei je nach Ausführungsform solcher Verfahren eine selbsttätige Betätigung von Gas, Bremse und/oder Lenkung. Beispielsweise sind Verfahren bekannt, die anhand einer mathematischen Modellierung des Fahrzeuges, der Fahrzeugumgebung sowie eines Modells des Fahrwerkes einen Einparkvorgang berechnen und in einem oder mehreren Schritten automatisiert durchführen können. Bei der Mehrzahl der Verfahren dieser Art kann der Benutzer im Fehlerfall jederzeit gegenlenken, das Manöver abbrechen und gegebenenfalls in die Startposition zurückkehren.

Um einen erfolgreichen Einparkvorgang zu gewährleisten, muss bei den genannten teil- oder vollautomatischen Verfahren in der Regel eine Reihe von definierten Randbedingungen erfüllt sein. Solche Randbedingungen können beispielsweise die Form und Höhe einer Bordsteinkante, die Krümmung eines Fahrbahnabschnitts oder die Breite der eine Parklücke begrenzenden Fahrzeuge betreffen. Auch die Startposition des eigenen Kraftfahrzeuges relativ zur Parklücke muss in der Regel eng definierten Kriterien genügen.

Zudem ist die Zuverlässigkeit solcher Verfahren aufgrund von Ungenauigkeiten der Sensorik und/oder Datenverarbeitung häufig begrenzt. Die aus dem Stand der Technik bekannten Verfahren erlauben es dem Fahrer aber in der Regel nicht, eine objektive Fehlplanung durch das Verfahren zu erkennen und/oder zu korrigieren und somit unter Umständen auch Gefahrensituationen zu vermeiden.

Dass bei den aus dem Stand der Technik bekannten Verfahren für den Bediener des Kraftfahrzeuges nur sehr begrenzte Möglichkeiten der Mitbestimmung bestehen, ist ferner aus noch einem weiteren Grund als nachteilig zu erachten. Vielen Verfahren liegt eine automatische Interpretation der Umgebung des einzuparkenden Kraftfahrzeugs zugrunde. Unter einer automatischen Interpretation ist dabei eine durch informationstechnische Methoden erfolgende Beurteilung der Umgebungssituation anhand der zur Verfügung stehenden Daten zu verstehen. Der Bediener selbst kann sich an dieser automatischen Interpretation, selbst wenn er dies will, meist nicht beteiligen, sondern typischerweise nur ein auf die automatische Interpretation folgendes Verfahren abbrechen. Dies kann dazu führen, dass der Bediener sich durch das auf der automatischen Interpretation beruhende Verfahren bzw. System gegängelt, bevormundet oder zumindest in seinem Bedienkomfort eingeschränkt fühlt.

Falls der Fahrer die Umgebungssituation anders interpretiert als das Verfahren bzw. System, kann er durch die vermeintliche Hilfestellung des Verfahrens bzw. Systems, insbesondere bei einem teilautomatischen Einparkvorgang, sogar irritiert werden oder sich fälschlicherweise (trotz unterschiedlicher Intentionen von Bediener und System) auf diese Hilfestellung verlassen. Beispielsweise kann, selbst wenn das Verfahren bzw. System einen an sich gefahrlosen teilautomatischen Einparkvorgang geplant hat, ein von dem Verfahren bzw. System vorgeschlagenes Handeln für einen anderen Einparkvorgang - nämlich den mit vom System abweichender Intention vom Fahrer geplanten Einparkvorgang - unangemessen sein. Insbesondere durch den letztgenannten Fall können Gefahrensituationen verursacht werden.

Aufgabe der Erfindung ist es, ein Verfahren der eingangs genannten Gattung zu schaffen, bei welchem die Fähigkeit des Bedieners zur Interpretation der Umgebungssituation verbessert genutzt wird.

Diese Aufgabe wird erfindungsgemäß gelöst durch ein Verfahren gemäß Patentanspruch 1. Bevorzugte Ausführungsformen und vorteilhafte Weiterbildungen ergeben sich aus den abhängigen Patentansprüchen.

Erfindungsgemäß wird also bei einem Verfahren zur Steuerung eines zumindest teilautomatisch durchführbaren Einparkvorgangs, durch welchen ein Kraftfahrzeug von einer Istposition in eine Sollposition verbringbar ist, dem Bediener des Kraftfahrzeugs durch eine Anzeigeeinheit im Inneren des Kraftfahrzeugs ein Bild der Umgebung des Kraftfahrzeugs dargestellt. Das Umgebungsbild kann ein Kamerabild (mit oder ohne geometrische Transformationen, z.B. simulierter Blick aus der Vogelperspektive) sein oder aber eine modellhafte Darstellung der sensierten Umgebung des Kraftfahrzeuges. Der zumindest teilautomatische, d.h. voll- oder teilautomatische Einparkvorgang, kann darauf beruhen, dass Lenkung, Gas und/oder Bremse des Kraftfahrzeuges zumindest teilweise selbsttätig bedient werden und/oder darauf, dass dem Fahrer Anweisungen bezüglich der Fahrzeugbedienung (Lenkeinschlag, Bremse etc.) gegeben werden. In dem Umgebungsbild wird ein virtuelles Zielobjekt dargestellt. Aus Sicht des Bedieners repräsentiert das Zielobjekt sein Kraftfahrzeug in der dargestellten Umgebungsszene. Die Bildposition des Zielobjekts im Umgebungsbild entspricht einer Zielposition für das Kraftfahrzeug in der Umgebung des Kraftfahrzeugs. Die Zielposition für das Kraftfahrzeug stellt eine voraussichtliche bzw. geplante Position des Kraftfahrzeugs nach dem Einparkvorgang dar. Das Zielobjekt verkörpert die Zielposition, genauer gesagt das virtuell in der Zielposition befindliche Kraftfahrzeug, im Umgebungsbild. Zunächst wird die Zielposition jedoch noch nicht als Sollposition des Einparkvorgangs übernommen. Vielmehr besteht ein wesentlicher Schritt der Erfindung darin, dass die Bildposition des Zielobjekts in dem Umgebungsbild durch den Bediener verändert werden kann. Der Bediener kann dies durch Bedienaktionen tun, beispielsweise durch die Betätigung eines Dreh-/Druckstellers oder durch Sprach- oder Gestikeingaben. Da eine Entsprechung zwischen Bildposition und Zielposition besteht, wird mit der Veränderung der Bildposition, zumindest aus Sicht des Bedieners, auch die Zielposition verändert. Je nach Ausführungsform des erfindungsgemäßen Verfahrens kann die Veränderung der Bildposition unmittelbar durch die Bedienaktionen erreicht werden. Alternativ kann durch die Bedienaktionen eigentlich, d.h. aus informationstechnischer Sicht, unmittelbar die Zielposition verändert werden und erst infolgedessen, also mittelbar, die Bildposition. Durch eine Auswahlaktion des Bedieners wird schließlich die veränderte Bildposition des Zielobjekts ausgewählt und die der veränderten Bildposition des Zielobjekts entsprechende veränderte Zielposition für das Kraftfahrzeug wird als Sollposition des Einparkvorgangs übernommen.

Durch die Erfindung wird dem Bediener also die Möglichkeit gegeben, die Sollposition für den Einparkvorgang zu beeinflussen. Gemäß bevorzugter Ausführungsformen der Erfindung wird dem Bediener alternativ oder zusätzlich die Möglichkeit gegeben, den benötigten Rangierraum zu beeinflussen. Das erfindungsgemäße, auf einer visuellen Darstellung basierende, Verfahren unterstützt den Bediener dabei in besonders bedienerfreundlicher Art und Weise. Der Bediener kann sein Kraftfahrzeug zunächst virtuell in einer gewünschten Position, der Zielposition, platzieren und erst dann veranlassen, dass das Kraftfahrzeug tatsächlich durch den Einparkvorgang dorthin verbracht wird. Durch die Erfindung wird das Interpretationsvermögen des Bedieners für den anschließenden Einparkvorgang nutzbar gemacht.

Sofern eine automatische Interpretation der Umgebung des Kraftfahrzeugs stattfindet, kann der Bediener diese Interpretation bzw. eine daraus abgeleitete Planung korrigieren bzw. überstimmen. Die Korrektur bzw. das Überstimmen kann erfindungsgemäß auf Basis der Darstellung des virtuellen Zielobjekts im Umgebungsbild erfolgen. Gegebenenfalls kann eine automatische Interpretation der Umgebung des einzuparkenden Kraftfahrzeugs sogar komplett entfallen. Die hierzu erforderlichen Verfahren und Vorrichtungen können dann eingespart bzw. entlastet werden.

Bevorzugt wird jedoch zumindest einmalig, gegebenenfalls auch wiederholt, eine automatische Interpretation der Umgebung des einzuparkenden Kraftfahrzeugs durchgeführt, um zumindest eine zulässige und/oder bevorzugte Zielposition zu bestimmen. Durch eine solche automatische Interpretation können besonders vorteilhafte Ausführungsformen der Erfindung realisiert werden. Beispielsweise kann das Ergebnis einer solchen Interpretation eine zu Beginn des Verfahrens, gewissermaßen als Startwert, verwendete Zielposition sein. Dieser Startwert kann beispielsweise eine aus der automatischen Interpretation gewonnene objektiv optimale Parkposition sein. Im Gegensatz zum Stand der Technik wird dem Bediener durch die Erfindung in einem solchen Fall jedoch die Möglichkeit gegeben, das Ergebnis der automatischen Interpretation zu korrigieren, insbesondere nach subjektiven Kriterien zu korrigieren. Das zunächst gelieferte Ergebnis der Interpretation kann dem Bediener also gewissermaßen als erster Vorschlag für eine Sollposition dienen. Vorzugsweise kann der Bediener, sofern er dies will, diesen Vorschlag auch durch eine einfache Auswahl- bzw. Bestätigungsaktion übernehmen.

Wesentlicher Aspekt der Erfindung bleibt jedoch die Tatsache, dass der Bediener im Falle eines seiner Ansicht nach unzutreffenden oder zumindest nicht favorisierten Ergebnisses einer automatischen Interpretation der Umgebungssituation die Möglichkeit hat, seine Intention bzw. das Ergebnis seiner eigenen Interpretation für den anschließenden Einparkvorgang nutzbar zu machen. Wenn beispielsweise ein von der aktuellen Istposition des Kraftfahrzeugs sehr leicht erreichbarer Parkplatz als erste Zielposition vorgeschlagen wird, muss der Bediener diesen Vorschlag nicht zwingend als Sollposition akzeptieren. Er kann vielmehr stattdessen eine andere Zielposition einstellen, etwa einen zunächst nur ungünstig, beispielsweise durch mehrmaliges Rangieren oder eine weitere Fahrstrecke, erreichbaren Parkplatz, der aber einen kürzeren nach dem Einparkvorgang durch den Bediener zurückzulegenden Fußweg bedingt und daher vom Bediener subjektiv bevorzugt wird. Das genannte Einstellen der anderen Zielposition kann beispielsweise erfolgen durch eine Auswahl aus mehreren automatisch vorgeschlagenen Möglichkeiten oder durch eine Korrektur aushgehend vom ersten Vorschlag.

Die Erfindung ermöglicht außerdem eine Festlegung einer sinnvollen Sollposition auch in Umgebungen, in welchen eine automatische Interpretation typischerweise versagt. Beispielsweise kann der Bediener durch die Erfindung eine ganz bestimmte Position auf einer großen freien Fläche als Sollposition festlegen oder einen ganz bestimmten, subjektiv favorisierten, Parkplatz aus einer Vielzahl freier Parkplätze auswählen.

Vorzugsweise wird an zumindest einer Stelle des erfindungsgemäßen Verfahrens, beispielsweise zu Beginn des Verfahrens oder erst zur Durchführung des Einparkvorgangs die Istposition des Kraftfahrzeugs ermittelt. Eine eventuelle Ermittlung der Istposition kann absolut oder relativ zu Umgebungsobjekten, vorzugsweise auf der Basis von Sensorsignalen, erfolgen. Die eventuell ermittelte Istposition kann zur Berechnung von Trajektorien für den Einparkvorgang herangezogen werden.

Wie bereits angesprochen, besteht eine Entsprechung, d. h. ein enger Zusammenhang, zwischen der Bildposition des Zielobjekts im Umgebungsbild und einer durch diese Bildposition veranschaulichten Zielposition für das Kraftfahrzeug in der Umgebung. In der Regel wird diese Entsprechung darin bestehen, dass die Bildposition des Zielobjekts in einem zweidimensionalen Umgebungsbild so gewählt wird, dass für den Bediener der Eindruck entsteht, dass sich das Zielobjekt in der abgebildeten dreidimensionalen Fahrzeugumgebung an der Zielposition befindet.

Die Darstellung des Zielobjekts im Umgebungsbild kann durch die Berücksichtigung von Perspektive, beispielsweise Weitwinkelverzeichnungen, und eine entsprechende mathematische Modellierung so gestaltet sein, dass bei der Darstellung eine hinreichende Konsistenz des Zielobjekts mit der Umgebung gewährleistet ist.

Zwar wird dem Bediener in der Regel ein zweidimensionales Umgebungsbild angezeigt werden, der Bediener wird darin jedoch die repräsentierte dreidimensionale Umgebung erkennen und das Zielobjekt somit nicht nur als Bestandteil des Umgebungsbildes, sondern ebenso und insbesondere als Bestandteil der im Umgebungsbild dargestellten Umgebungssituation auffassen. Insofern kann, zumindest aus Sicht des Bedieners, auch von einer Positionierung des Zielobjekts in der Umgebung gesprochen werden.

Gemäß einer bevorzugten Ausführungsform der vorliegenden Erfindung ist neben der Zielposition auch die Zielausrichtung (Verdrehung um die Fahrzeughochachse) des Kraftfahrzeugs in der Umgebung veränderbar. Der Bediener kann das Zielobjekt dann nicht nur in eine gewünschte Position, sondern auch in eine gewünschte Ausrichtung bringen. Dadurch wird nicht nur ein Quer- oder Längseinparken, sondern auch ein Einparken unter einem beliebigen Winkel zu der aktuellen Fahrzeugposition möglich. Im Umgebungsbild ist die Veränderung der Zielausrichtung durch eine entsprechend veränderte Ansicht des Zielobjekts darstellbar. In dem Fall, dass das Umgebungsbild eine Draufsicht der Umgebungsszene zeigt, entspricht die Veränderung der Zielausrichtung einer schlichten Verdrehung des Zielobjekts im Umgebungsbild. Somit wird durch die Erfindung eine vorteilhafte und anwendungsgerechte Interaktion zwischen dem Benutzer und dem erfindungsgemäßen System ermöglicht.

Wie bereits angesprochen, sind zumindest zwei grundlegende Varianten der Erfindung denkbar. Gemäß einer ersten Variante der Erfindung beziehen sich die Bedienaktionen des Bedieners aus informationstechnischer Sicht unmittelbar auf die Zielposition und ggf. Zielausrichtung des Kraftfahrzeugs in der Umgebung. Der Bediener bedient dann gewissermaßen ein Umgebungsmodell und verändert die Position und ggf. Ausrichtung eines in diesem Umgebungsmodell enthaltenen virtuellen Fahrzeugobjekts. Damit der Bediener die vorgenommenen Änderungen verfolgen kann, wird ihm ein entsprechend verändertes Zielobjekt im Umgebungsbild angezeigt. Die Bildposition und ggf. die Darstellung des Zielobjekts im Umgebungsbild wird aus der Position und ggf. Ausrichtung des in dem Umgebungsmodell enthaltenen virtuellen Fahrzeugobjekts abgeleitet. Veränderungen der Bildposition folgen also mittelbar aus den Bedienaktionen des Bedieners. Vorzugsweise erfolgt die Veränderung der Anzeige im Umgebungsbild schritthaltend mit der Veränderung der Zielposition und ggf. Zielausrichtung.

Gemäß einer zweiten Variante der Erfindung beziehen sich die Bedienaktionen des Bedieners aus informationstechnischer Sicht unmittelbar auf das Zielobjekt im Umgebungsbild, insbesondere auf dessen Bildposition. Bei dieser Variante der Erfindung muss die zugehörige Zielposition und ggf. Zielausrichtung des Kraftfahrzeugs nicht notwendigerweise schritthaltend bestimmt werden. Auf diese Weise kann die Erfindung sehr ressourcensparend umgesetzt werden. Im einfachsten Fall genügt es, wenn eine zugehörige Zielposition und ggf. Zielausrichtung bestimmt wird, sobald eine Bildposition durch den Bediener ausgewählt worden ist. Zu beachten ist jedoch, dass bei dieser Variante der Erfindung ohne weitere Maßnahmen auch eine Bildposition ausgewählt werden könnte, aus welcher eine unzulässige Zielposition folgt. Eine Zielposition kann beispielsweise unzulässig sein, wenn sie von der Istposition aus - beispielsweise unter Berücksichtigung der Fahrzeugabmessungen und maximaler Lenkwinkel sowie ggf. eines Sicherheitsabstands - nicht ohne Kollisionen mit Hindernissen erreichbar ist oder das Risiko einer Kollision und/oder Verkehrsbehinderung eine gewisse Schwelle überschreitet. Diese Problematik kann jedoch, sofern die Unzulässigkeit automatisch feststellbar ist, durch eine Warnung an den Bediener nach der Auswahl oder beim Versuch der Auswahl, durch eine Verweigerung der Übernahme der Zielposition als Sollposition und/oder durch eine Korrektur der vom Bediener eingestellten Zielposition auf eine zulässige Zielposition gelöst werden.

Als äquivalent zu einer Veränderung der Ziel- bzw. Bildposition des Zielobjekts gegenüber einem feststehenden Umgebungsmodell bzw. -bild ist selbstverständlich eine entsprechende Verschiebung der Position des Umgebungsmodells bzw. Umgebungsbilds gegenüber einem feststehenden Zielobjekt anzusehen.

Die folgenden Ausführungen beziehen sich ohne Beschränkung der Allgemeinheit auf den bevorzugten Fall der ersten Variante der Erfindung.

Die vom Bediener durch die Bedienaktionen (gemäß der ersten Variante der Erfindung mittelbar) vorgenommene Veränderung der Bildposition des Zielobjekts kann ortsdiskret, kontinuierlich oder quasi-kontinuierlich, d. h. in kleinen Schritten, erfolgen.

Eine bevorzugte Ausführungsform einer kontinuierlichen Veränderung kann darin bestehen, dass der Bediener die Möglichkeit hat, das Zielobjekt - ähnlich der Steuerung einer Spielfigur bei einem Computerspiel - frei im Umgebungsbild zu verschieben und ggf. zu verdrehen. Der Bediener kann dann gewissermaßen sein Kraftfahrzeug - repräsentiert durch das Zielobjekt - virtuell einparken. Eine Verschiebungsgeschwindigkeit des Zielobjekts kann abhängig von der Betätigungsdauer des Bedienelements gestaltet werden. So kann die Geschwindigkeit bspw. bei einem längeren Tastendruck erhöht werden, da davon ausgegangen wird, dass der Benutzer das Zielobjekt relativ weit verschieben will.

Eine bevorzugte Ausführungsform einer ortsdiskreten Veränderung besteht darin, dass durch eine automatische Interpretation der Umgebung eine erste und eine zweite Zielposition bestimmt werden und das Zielobjekt durch eine Bedienaktion des Bedieners von einer der ersten Zielposition entsprechenden Bildposition zu einer der zweiten Zielposition entsprechenden Bildposition verschoben wird. Das Verschieben kann im wortwörtlichen Sinne sprungartig erfolgen, d.h. das Zielobjekt verschwindet instantan an der Bildposition, die der ersten Zielposition entspricht, und taucht ebenso instantan wieder auf an der Bildposition, die der zweiten Zielposition entspricht. Für eine visuell gefälligere und/oder nachvollziehbarere Darstellung kann das Zielobjekt auch selbsttätig kontinuierlich über die Anzeigeeinheit (z.B. einen Bildschirm) von der ersten zur zweiten Bildposition bewegt werden. Das Zielobjekt kann auch langsam an der ersten Bildposition ausgeblendet und an der zweiten Bildposition wieder eingeblendet werden. Der Bediener hat also die Möglichkeit, das Zielobjekt durch Bedienaktionen ortsdiskret zwischen mehreren zulässigen und/oder bevorzugten Ziel- bzw. Bildpositionen (z.B. mehreren Parklücken) "hin- und herspringen" zu lassen. Dem Bediener wird so eine komfortable Möglichkeit geboten, zwischen mehreren vorgeschlagenen Zielpositionen auszuwählen. Die unter Umständen aufwändigere Steuerung gemäß der im vorhergehenden Abschnitt genannten kontinuierlichen Veränderung kann dann entfallen. Der Bediener muss nur (beispielsweise durch das Drehen eines Dreh-/Druckstellers oder die mehrfache Betätigung einer "Weiten"-Taste) eine der mehreren vorgeschlagenen Positionen einstellen.

Insbesondere bei einer solchen Ausführungsform der Erfindung kann es sinnvoll sein, wenn zusätzlich zu dem ortsdiskret im Umgebungsbild verschiebbaren Zielobjekt an anderen "anspringbaren" Bildpositionen Alternativzielobjekte angezeigt werden. Zur Unterscheidung von dem Zielobjekt können die Alternativzielobjekte anders als das Zielobjekt gekennzeichnet werden, etwa in anderer Farbe und/oder Transparenz dargestellt werden. Wenn an jeder anspringbaren Bildposition, an welcher sich das Zielobjekt aktuell nicht befindet, ein Alternativzielobjekt angezeigt wird, kann dadurch das Erscheinungsbild eines "Togglen" erreicht werden. Das Zielobjekt springt dann gesteuert von Bedienaktionen des Bedieners durch die möglichen Positionen, welche durch die Alternativzielobjekte markiert sind. Der Bediener kann bei einer solchen Darstellungsform sehr schnell erfassen, welche Optionen er hat, kann dann sehr einfach eine der Optionen anspringen und diese anschließend auswählen.

Ein sehr komfortables Bedienverhalten kann auch erreicht werden, wenn das Zielobjekt zwar grundsätzlich kontinuierlich durch den Bediener beweglich ist, jedoch an bevorzugten Bild-/Zielpositionen "einrastet".

Vorzugsweise wird der Einparkvorgang unmittelbar mit der Übernahme bzw. durch die Übernahme der Zielposition als Sollposition gestartet. Der Bediener muss dann keine weitere Aktion mehr vornehmen, um den Einparkvorgang zu starten. Das Verfahren kann jedoch auch so gestaltet werden, dass vor dem Start des Einparkvorgangs zunächst eine weitere Bestätigungsaktion erforderlich ist. Dies kann sinnvoll sein, wenn dem Bediener nach der Übernahme zunächst eine Trajektorie angezeigt wird, auf welcher das Kraftfahrzeug zur Zielposition gelangen könnte. Der Bediener kann dann durch die weitere Bestätigungsaktion seine Zustimmung zum Start des Einparkvorgangs auf dieser Trajektorie geben. Auf die Möglichkeit der Anzeige einer solchen Trajektorie wird an späterer Stelle noch genauer eingegangen.

Sofern festgestellt wird, dass eine vom Bediener eingestellte Zielposition nicht zulässig ist oder der Einparkvorgang zu dieser Zielposition mit Gefahren verbunden ist, kann auf die Auswahlaktion auch eine Nichtübernahme der Zielposition als Sollposition folgen.

Die Zielposition kann auch automatisch so korrigiert werden, dass sich eine zulässige Zielposition ergibt. Hierzu ist es erforderlich, die Zulässigkeit bzw. Unzulässigkeit der eingestellten Zielposition - beispielsweise durch eine automatische Interpretation der Umgebung - festzustellen. Vorzugsweise wird die entsprechend korrigierte Zielposition in der Nähe der zunächst eingestellten unkorrigierten Zielposition festgelegt. Dies entspricht einem Einrasten an einer zulässigen Zielposition. Der Bediener muss die Zielposition dann nicht in letzter Exaktheit einstellen, kann aber dennoch seine grobe Absicht durch seine Bedienaktionen ausdrücken. Vorzugsweise wird auch die Bildposition an die korrigierte Zielposition angepasst, wodurch die Korrektur für den Bediener offensichtlich wird. Die Korrektur bzw. das Einrasten kann bereits schritthaltend mit den Bedienaktionen des Bedieners erfolgen. Der Bediener kann dann gar keine unzulässigen Bild-/Zielpositionen einstellen. Dadurch kann aus Sicht des Bedieners der Effekt eines Anstoßens bzw. Entlanggleitens des Zielobjekts an den Grenzen des zulässigen Bereichs erreicht werden. Die Korrektur kann jedoch auch erst nach einer Unterbrechung der Bedienaktionen oder als Folge der Auswahlaktion erfolgen.

Insbesondere bei schritthaltender Korrektur der Zielposition kann das Anstoßen bzw. Entlanggleiten des Zielobjekts an einer Grenze des zulässigen Bereichs dem Bediener durch eine haptische Rückmeldung angezeigt bzw. ermöglicht werden. Beispielsweise kann sich ein Bedienelement, durch dessen Bewegung der Bediener das Zielobjekt im Umgebungsbild verschiebt, dann aufgrund eines haptischen Widerstands des Bedienelements nicht weiter in die entsprechende Richtung verschieben lassen.

Die haptische Rückmeldung kann abhängig von der Art der Hindernisse gestaltet sein. Ist beispielsweise das Einparken des Fahrzeuges in eine Parklücke aufgrund geometrischer Gegebenheiten nicht möglich, kann ein haptischer Widerstand beim Drehen oder Verschieben des Bedienelements eingesetzt werden. Ist die Parklücke hingegen für das Fahrzeug geeignet, kann aber nicht mit einem zulässigen Manöver erreicht werden, so kann dies dem Fahrzeugbediener beispielsweise durch ein Vibrationssignal des Drehschalters signalisiert werden.

Auch eine akustische Rückmeldung bezüglich eines Anstoßens bzw. Entlanggleitens des Zielobjekts an einer Grenze des zulässigen Bereichs kann den Bediener unterstützen.

Alternativ oder zusätzlich zu einer Korrektur der Zielposition kann auch eine (z.B. akustische und/oder optische und/oder haptische) Warnung an den Bediener ausgegeben werden, wenn eine unzulässige Zielposition eingestellt und/oder ausgewählt wird.

Im Falle einer akustischen Rückmeldung, die den Fahrzeugbediener zumindest auf eine mögliche Unzulässigkeit der Bedienung des Zielobjekts aufmerksam macht, erfolgt diese Rückmeldung vorzugsweise richtungsabhängig. So kann durch Ansteuerung eines Klangausgabesystems des Fahrzeuges (z.B. Stereoanlage), welches typischerweise mehrere Lautsprecher beinhaltet, unter Ausnutzung von Stereo- bzw. Sourroundeffekten eine richtungsabhängige Rückmeldung über drohende Kollisionen oder ein physikalisch nicht durchführbares Manöver beim Verschieben des Zielobjekts geben.

Bereits an früherer Stelle wurde erwähnt, dass das Zielobjekt vorzugsweise so in das Umgebungsbild eingeblendet wird, dass für den Bediener der Eindruck entsteht, dass sich das Zielobjekt selbst in der abgebildeten dreidimensionalen Fahrzeugumgebung an der Zielposition befindet. Es kann also von einer Verkörperung des Zielobjekts in der Umgebung gesprochen werden.

Vorzugsweise ist das Zielobjekt so gestaltet, dass es in der Umgebung ein virtuelles Kraftfahrzeug verkörpert. Seine graphische Darstellung wird also dem Abbild eines Kraftfahrzeugs nachempfunden. Durch die Einblendung des Zielobjekts ins Umgebungsbild entsteht beim Bediener dann der Eindruck, dass sich an der Zielposition in der Umgebung ein virtuelles Kraftfahrzeug befindet. Besonders vorteilhaft ist es, wenn das virtuelle Kraftfahrzeug ein Abbild des tatsächlich einzuparkenden Kraftfahrzeugs darstellt oder diesem zumindest ähnelt. Dies macht die Bedien-Metapher, die der Erfindung zugrunde liegt, besonders deutlich: Der Bediener verschiebt durch seine Bedienaktionen sein eigenes (virtuelles) Kraftfahrzeug in der Umgebung an die gewünschte Zielposition.

Beispielsweise kann das virtuelle Kraftfahrzeug als ein 3D-Gerüst des Kraftfahrzeuges dargestellt sein. Ein solches Gerüst kann zur Einsparung von Ressourcen auf Kanten beschränkt sein, die bei perspektivischer Ansicht eines massiven, undurchsichtigen Objekts sichtbar wären. Die Darstellung kann auch zusätzliche Hilfs-Elemente enthalten, die einen Sicherheitsabstand bzw. Rangierabstand zu sonstigen Hindernissen für den Bediener im Umgebungsbild veranschaulichen. Zu demselben Zweck kann das virtuelle Kraftfahrzeug auch größer als das reale Kraftfahrzeug dargestellt werden. Ebenso kann die Darstellung zusätzliche Hilfs-Elemente (z. B. Richtungspfeile) enthalten, welche die Tatsache verdeutlichen, dass das Zielobjekt durch den Bediener steuerbar ist.

Vorzugsweise ist das Zielobjekt so gestaltet, dass seine Verkörperung in der Umgebung zumindest teilweise deutlich nach oben über die Fahrbahnebene hinausragt. Grundsätzlich genügt es dazu, wenn sich ein einziger Bestandteil, z. B. eine Fläche bzw. Hyperfläche, der Verkörperung des Zielobjekts in der Umgebung deutlich oberhalb der Fahrbahnebene befindet. Verkörpert das Zielobjekt ein virtuelles Kraftfahrzeug, kann es sich dabei um das Dach des virtuellen Kraftfahrzeugs handeln. Diese bevorzugte Ausführungsform der Erfindung bietet, insbesondere im Falle einer perspektivischen Ansicht der Umgebung im Umgebungsbild - etwa gegenüber bloßen Markierungen in der Fahrbahnebene oder knapp oberhalb derselben - den Vorteil, dass die Verkörperung des Zielobjekts auch im Falle einer Verdeckung durch andere Fahrzeuge, welche beispielsweise eine Parklücke begrenzen, und/oder durch sonstige Hindernisse zumindest teilweise sichtbar bleibt. Verkörpert das Zielobjekt ein virtuelles Kraftfahrzeug, sollte dieses ausreichend hoch sein, um dieser Anforderung gerecht zu werden. Ein solches virtuelles Kraftfahrzeug kann zu diesem Zweck auch unverhältnismäßig hoch im Vergleich zum realen Kraftfahrzeug dargestellt werden. Es kann auch mit einem zusätzlichen Dachaufbau, insbesondere einer Antenne, oder einer Hilfsmarkierung, z. B. einem Fähnchen oder Pfeil, dargestellt werden. Solche Maßnahmen zur Verbesserung der Sichtbarkeit im Falle tatsächlicher oder drohender Verdeckungen können auch situationsabhängig nur dann ergriffen werden, wenn Verdeckungen bestehen oder drohen. Die Darstellung wird dann in allen anderen Fällen nicht verfälscht.

Zusätzlich kann es vorteilhaft sein, wenn das Zielobjekt so gestaltet ist, dass seine Verkörperung in der Umgebung zumindest einen Bestandteil, z. B. eine Fläche bzw. Hyperfläche, enthält, der von einem eventuell deutlich oberhalb der Fahrbahnebene angeordneten Bestandteil im Wesentlichen nach unten auf die Fahrbahnebene weist, und somit die Fläche markiert, die von der Verkörperung des Zielobjekts in der aktuell eingestellten Zielposition besetzt wird. So kann eine Projektion des deutlich oberhalb der Fahrbahnebene angeordneten Bestandteils (der auch aus einer ungünstigen Perspektive sichtbar ist) auf die Fahrbahnebene verdeutlicht werden, was dem Bediener eine verbesserte räumliche Einschätzung der Umgebungsszene ermöglicht. Im Falle eines virtuellen Kraftfahrzeugs kann dies durch die Seitenumfänge des virtuellen Kraftfahrzeugs gewährleistet werden. Das gemäß der oben beschriebenen Anforderungen auch bei Verdeckungen gut sichtbare Fahrzeugdach hängt somit nicht "in der Luft", sondern erhält auch bei einem zweidimensionalen Umgebungsbild einen klaren räumlichen Bezug.

Im Folgenden wird ohne Beschränkung der Allgemeinheit davon ausgegangen, dass das Zielobjekt so gestaltet ist, dass es in der Umgebung ein virtuelles Kraftfahrzeug verkörpert.

Das Zielobjekt kann ganz oder teilweise teiltransparent ausgestaltet sein. Dadurch kann verdeutlicht werden, dass das virtuelle Zielobjekt lediglich in das Umgebungsbild eingeblendet ist, also virtuellen Charakter besitzt. Zudem bleiben verdeckte Teile und Merkmale der Umgebung zumindest zum Teil sichtbar. Kanten des Zielobjekts bzw. des virtuellen Kraftfahrzeugs können dann vorzugsweise ausgestaltet sein als opake (undurchsichtige) Linien oder Linien mit einem niedrigeren Transparenzfaktor als die anliegenden verbindenden Flächen des Zielobjekts bzw. des virtuellen Kraftfahrzeugs. Der dreidimensionale Eindruck des virtuellen Kraftfahrzeugs wird dadurch sinnvoll unterstrichen. Dem Bediener wird die Interpretation der Umgebungsszene erleichtert, der von ihm empfundene Qualitätseindruck wird gesteigert.

Vorzugsweise erfolgt die graphische Darstellung des Zielobjekts im Umgebungsbild zumindest teilweise in Abhängigkeit von der lokalen Bildhelligkeit und/oder von Farbwerten der umliegenden Bildpunkte. Beispielsweise kann die Einblendung des Zielobjekts auf einer Kombination aus negativ-multiplikativen und additiven Bildverarbeitungsoperationen beruhen.

Bei der graphischen Darstellung des Zielobjekts im Umgebungsbild ist vorzugsweise ein Kompromiss zwischen Sichtbarkeit, der erforderlichen Transparenz und einem ansprechenden Erscheinungsbild einzugehen. Eine einfache und gut funktionierende Methode stellt dabei eine Einblendung des Zielobjekts auf die Hintergrundpixelwerte mittels einer Kombination negativmultiplikativer und additiver Verfahren dar. Damit wird ein umgekehrter "Chamäleon-Effekt" erreicht; es wird stets ein Mindest-Kontrastverhältnis bzw. Farbunterschied mit der Umgebung aufrechterhalten, dennoch bleibt das Zielobjekt transparent.

Vorzugsweise erfolgt die Darstellung der Umgebung, insbesondere des Zielobjekts, im Umgebungsbild derart, dass Teile des virtuellen Kraftfahrzeugs, die in einem dreidimensionalen Umgebungsmodell vom Beobachtungspunkt aus hinter einem Hindernis - beispielsweise einem anderen Kraftfahrzeug - angeordnet sind, durch das jeweilige Hindernis verdeckt dargestellt werden.

Dies gewährleistet die vom Betrachter erwartete "Beibehaltung der physikalischen Gesetzte" auch in der dargestellten Umgebungsszene. Die von modernen Computerspielen und anderen computerbasierten Anwendungen der Visualisierung von geometrischen Datenmodellen bekannten Verfahren ermöglichen eine realistische Umsetzung solcher Verdeckungen.

Verdeckte Teile des virtuellen Kraftfahrzeugs können jedoch auch lediglich graphisch verändert, etwa mit höherer Transparenz dargestellt werden. Sie bleiben dadurch für den Bediener sichtbar.

Erfindungsgemäß wird die Bildposition des Zielobjekts in dem Umgebungsbild in Abhängigkeit von Bedienaktionen des Bedieners verändert. Gemäß einer bevorzugten Ausführungsform der vorliegenden Erfindung sind die Bedienaktionen des Bedieners zumindest teilweise auf einen Dreh-/Drucksteller bezogen. Typische Dreh-/Drucksteller, beispielsweise der aus Kraftfahrzeugen der Anmelderin bekannte Dreh-/Drucksteller, bieten die Bedienmöglichkeiten: Verschieben in mehreren Richtungen, Drehen und Drücken (von oben). Die Erfindung kann in einfacher und intuitiver Weise umgesetzt werden, wenn ein Verschieben des Dreh-/Druckstellers eine (quasi-) kontinuierliche Veränderung der Zielposition in der Fahrbahnebene bedingt, wenn gegebenenfalls ein Verdrehen des Dreh-/Druckstellers eine Drehung des virtuellen Kraftfahrzeugs um seine Hochachse bedingt und wenn ein Drücken des Dreh-/Druckstellers als Auswahlaktion verstanden wird. Der Bediener kann das virtuelle Kraftfahrzeug dann - komfortabel und ohne Umgreifen zu müssen - in der dargestellten Umgebungsszene entlang der Fahrbahnebene verschieben, es gegebenenfalls verdrehen und eine so eingestellte Zielposition und gegebenenfalls Zielausrichtung auswählen.

Verwendung finden können auch andere Bedienelemente, beispielsweise ein Touch-Screen. Es kann auch eine Sprach- oder Gestikerkennung zur Veränderung und/oder Auswahl der Zielposition und ggf. -ausrichtung verwendet werden. Ebenso können mehrere Eingabevarianten kombiniert werden und/oder wahlweise zur Verfügung stehen.

Im Umgebungsbild und/oder einem Zusatzbild können auch Hilfsgrafiken - beispielsweise ausgebildet als Richtungspfeile, Drehpfeile oder weitere Symbole - vorgesehen sein, die den Bediener bei der Ausführung der Bedien- und/oder Auswahlaktionen unterstützen. Diese können insbesondere als graphische Legende zur Bedienung und/oder als graphische Bedienelemente auf einem Touch-Screen ausgeführt sein. Vorzugsweise werden abhängig vom jeweiligen Bedienzustand insbesondere die jeweils zur Verfügung stehenden Bedien- bzw. Auswahlaktionen erläutert.

Vorzugsweise wird an den Bediener eine unmittelbare, beispielsweise haptische, Rückmeldung ausgegeben, anhand derer er beispielsweise erkennen kann, ob eine von ihm beabsichtigte Zielposition von der Istposition aus auf sinnvolle Weise, insbesondere kollisionsfrei, erreichbar ist. Der mögliche Umgang mit unzulässigen Zielpositionen und das durch eine schritthaltend durchgeführte Korrektur erreichbare Anstoßen bzw. Entlanggleiten an den Grenzen des zulässigen Bereichs wurde bereits an früherer Stelle beschrieben. Dies kann insbesondere durch eine haptische Rückmeldung effektvoll unterstützt werden.

Eine entsprechende haptische Rückmeldung wird vorzugsweise über ein zur Bedienung bzw. Auswahl verwendetes Bedienelement ausgegeben. Beispielsweise kann ein haptischer Dreh-/Drucksteller so angesteuert werden, dass eine Drehung oder ein Verschieben des Dreh-/Druckstellers blockiert oder mit erhöhtem Widerstand oder mit einer spürbaren Vibration beaufschlagt wird, wenn der Bediener im Begriff ist, eine unzulässige Zielposition einzustellen. Gleichermaßen kann auch eine Auswahlaktion blockiert, mit erhöhtem Widerstand oder mit einer spürbaren Vibration beaufschlagt werden, wenn der Bediener im Begriff ist, eine unzulässige Zielposition auszuwählen. Der Bediener kann physikalische Restriktionen hinsichtlich einer (weiteren) Veränderung der Zielposition somit auch selbst als physikalische Restriktionen "begreifen". Das haptische Feedback kann auch mit einem visuellen Feedback (z. B. Blinken bzw. Farbänderung des Zielobjekts) kombiniert werden.

Gemäß einer bevorzugten Ausführungsform der vorliegenden Erfindung wird im Umgebungsbild eine zur aktuell eingestellten Zielposition führende Trajektorie und/oder der gesamte erforderliche Platz auf der Fahrbahn, der vom eigenen Kraftfahrzeug während des Einparkvorgangs befahren werden muss, kenntlich gemacht. Der erforderliche Platz auf der Fahrbahn, der vom eigenen Kraftfahrzeug während des Einparkvorgangs befahren werden muss, wird im Folgenden kurz als Rangierraum bezeichnet. Er kann beispielsweise berechnet werden durch eine sich im Wesentlichen aus der Fahrzeugbreite umgebende Fläche, die sich im Wesentlichen entlang einer berechneten Trajektorie erstreckt. Die Kenntlichmachung der Trajektorie und/oder des Rangierraums kann beispielsweise erfolgen durch graphische Markierungen im Umgebungsbild, z. B. Linien und/oder teiltransparente Flächen auf der Fahrbahn und/oder Begrenzungen.

Vorzugsweise wird als Grundlage der Anzeige eine objektiv optimale Trajektorie von der Istposition zur aktuell eingestellten Zielposition bestimmt und ggf. nach einer Veränderung der Zielposition aktualisiert.

Besonders bei komplexeren Manövern, die ein Rangieren in mehr als einem Zug (d. h. ein "Hin- und Her-Fahren") erfordern, ist eine Anzeige der beschriebenen Art hilfreich. Der Bediener kann auf diese Weise nicht nur erkennen bzw. selbst einstellen, wo sein Kraftfahrzeug abgestellt werden soll, sondern auch auf welche Art und Weise, insbesondere auf welchem Weg bzw. mit welchem Platzbedarf er dorthin im Rahmen eines zumindest teilweise automatischen Einpark- oder Rangiermanövers gelangen kann. Zum einen wird dadurch das Vertrauen des Bedieners in ein entsprechendes Parkhilfesystem erhöht, da der Bediener die Intention des Systems umfassend nachvollziehen kann. Zum anderen wird der Komfort und die Sicherheit des Verfahrens erhöht, da der Bediener allzu umständliche, ausladende, lange andauernde und/oder aus seiner Sicht riskante Rangiermanöver vermeiden kann, indem er keine Zielposition auswählt, die nur durch ein solches Manöver erreichbar ist. Auf diese Weise kann das Interpretationsvermögen des Bedieners, welches demjenigen eines technischen Verfahrens häufig noch weit überlegen ist, für das Verfahren nutzbar gemacht werden.

Gemäß einer besonders bevorzugten Ausführungsform der vorliegenden Erfindung wird dem Bediener auch die Möglichkeit gegeben, aus mehreren möglichen Trajektorien zu einer einzigen Zielposition eine subjektiv bevorzugte Trajektorie auszuwählen. Vorzugsweise wählt der Bediener zunächst durch eine Auswahlaktion die Zielposition aus, stellt dann - sofern verschiedene Trajektorien zur Verfügung stehen - eine Trajektorie zu dieser Zielposition ein und wählt diese dann durch eine weitere Auswahlaktion aus. Wenn keine alternative Trajektorie zur eingestellten Zielposition vorliegt bzw. bestimmt werden kann, kann auf den Versuch des Bedieners, eine alternative Trajektorie einzustellen, auch eine neue Zielposition und ggf. eine Trajektorie, die zu derselben führt, vorgeschlagen werden.

Gemäß einer besonders bevorzugten Ausführungsform der vorliegenden Erfindung wird der Rangierraum, der für einen zur aktuell eingestellten Zielposition führenden geplanten Einparkvorgang erforderlich ist, im Umgebungsbild von einem nicht für das Rangiermanöver erforderlichen Raum graphisch abgetrennt. Beispielsweise können zur graphischen Abtrennung Graphikelemente dienen, die im Wesentlichen in Form von vertikal stehenden Abgrenzungsflächen ausgebildet sind. Vorzugsweise werden solche Graphikelemente zumindest teilweise teiltransparent gestaltet. Alternativ oder zusätzlich kann der erforderliche Rangierraum im Umgebungsbild eingefärbt und/oder mit einer sich im Wesentlichen entlang der Fahrbahnebene erstreckenden, beispielsweise teiltransparenten, Fläche belegt werden.

Abhängig davon, wie weit sich die aktuell favorisierte Zielposition des Fahrzeuges von der Beobachtungsposition des dargestellten Umgebungsbildes befindet, kann die Abbildungsgröße des Zielobjekts und die Sichtbarkeit der unmittelbar daran angrenzenden Umgebungsteile ohne weitere Maßnahmen sehr unterschiedlich ausfallen. Das für den Fahrer dargestellte Umgebungsbild kann deswegen als eine Transformation des erfassten oder erfassbaren Bereiches der Umgebung ausgestaltet werden. Die Transformation kann beispielsweise als Kombination mehrerer Einzelbilder oder als eine Auswahl eines interessierenden Bildbereichs aus einem größeren darstellbaren Bereich und/oder als Berechnung einer virtuellen Perspektive ausgestaltet sein. Der darstellbare Bereich kann dabei aus Daten mehrerer gleicher oder unterschiedlich gearteter Sensoreinheiten (z.B. Kameras) zusammengesetzt werden.

Die Transformation kann beispielsweise als eine vergrößerte Darstellung eines ausgewählten Bereichs eines weitwinklig von einer oder mehreren Kameras erfassten Bildes am Bildschirm ausgestaltet werden. Die Bilder von mehreren Kameras können dabei entweder umgeschaltet werden oder gemäß einer bevorzugten Ausgestaltung des Systems rechnerisch so miteinander kombiniert werden, dass sie ein zusammenhängendes Bild ergeben bzw. als solches wahrgenommen werden können. In diesem Fall kann das Umgebungsbild als eine beliebige Auswahl aus einem größeren darstellbaren Bild ausgestaltet sein.

Das dem Fahrer dargestellte Umgebungsbild kann insbesondere als eine Transformation des erfassbaren Umgebungsbereiches ausgestaltet werden, welche automatisch abhängig von der aktuellen relativen Position des Fahrzeugs zur Zielposition gesteuert wird.

Dies kann beispielsweise dadurch erreicht werden, dass mit der Verschiebung des Zielobjekts durch Bedienaktionen des Benutzers der aktuell dargestellte interessierende Bereich der Fahrzeugumgebung auf solche Weise verschoben, gescrollt, stufenlos vergrößert (gezoomt) oder perspektivisch transformiert wird, dass die Darstellungsgröße des Zielobjekts im Umgebungsbild weitgehend unabhängig von der Entfernung zu seiner relativen Position beibehalten wird und die Sichtbarkeit des unmittelbar an das Zielobjekt angrenzenden Umgebungsteile (z.B. Fahrzeuge, welche eine Parklücke begrenzen) optimiert wird.

Auch kann eine Bild-in-Bild Darstellung der vergrößert dargestellten Fahrzeugumgebung mit dem Zielobjekt in eine sonst vielmehr weitwinklige bzw. flächendeckende Umgebungsdarstellung oder aber von einer anderen Perspektive erfasste Umgebungsdarstellung oder eine Navigationskarte erfolgen. Somit kann dem Fahrer eine optimale Sichtbarkeit der unmittelbar an das Zielobjekt angrenzenden Objekte ermöglicht werden und es kann zudem gleichzeitig oder umschaltbar eine Übersichtsdarstellung zur Verfügung gestellt werden. Das Verhältnis zwischen dem Zoomfaktor für die Umgebung relativ zum Zielobjekt kann zudem variabel und durch den Fahrer veränderbar gestaltet werden.

Gemäß einer Weiterbildung der vorliegenden Erfindung werden Angaben zu möglichen Zielpositionen (z.B. freie Parkplätze) und/oder zur Bestimmung einer Trajektorie für das Einparken an einer solchen Zielposition mittels drahtloser Kommunikation von einer Datenbank außerhalb des Kraftfahrzeuges bezogen. Die empfangenen Angaben können bei dem Kraftfahrzeug ausgewertet werden, insbesondere kann der geometrische Zusammenhang zwischen einer derart übermittelten möglichen Zielposition und der Istposition des Kraftfahrzeugs errechnet werden.

Vorzugsweise erfolgt bei einer solchen Weiterbildung der Erfindung eine eventuelle Autorisierung beim Anbieter des entsprechenden Dienstes und/oder ein eventueller Bezahlvorgang und/oder der tatsächliche Bezug der Angaben zu möglichen Zielpositionen mittels herkömmlicher Mobilfunktechniken, insbesondere auf Basis einer SIM-Karte. Die Angaben zu möglichen Zielpositionen, die vorzugsweise zumindest Koordinaten der Zielpositionen in einem geeigneten Format enthalten, können dabei beispielsweise mittels einer automatisch verwertbaren SMS oder MMS an eine zum Empfang geeignete Recheneinheit des Kraftfahrzeugs übermittelt werden.

Derart übermittelte Angaben zu einer Zielposition und/oder einer Trajektorie können mit den Ergebnissen einer automatischen Interpretation der Umgebung des Kraftfahrzeugs abgeglichen und/oder kombiniert werden. Gegebenenfalls kann eine automatische Interpretation seitens des Kraftfahrzeugs auch komplett entfallen, wenn der Einparkvorgang allein auf Basis der übermittelten Angaben geplant werden kann.

Bei hinreichender Genauigkeit und Zuverlässigkeit der übermittelten Angaben sind derart übermittelte Angaben verwendbar für sämtliche oben beschriebenen Formen der Verwendung der Ergebnisse einer automatischen Interpretation. Die übermittelte Zielposition dient in einem erfindungsgemäßen Verfahren dann beispielsweise vorzugsweise als Startwert, der anschließend gegebenenfalls noch vom Bediener verändert werden kann.

Die Erfindung geht grundsätzlich davon aus, dass sich mögliche Zielpositionen in der Umgebung des Kraftfahrzeuges befinden. Bei weiterer Entfernung der Zielposition von der Istposition kann es erforderlich bzw. sinnvoll sein, dass der Bediener zuerst durch ein Navigationssystem des Kraftfahrzeugs in die Nähe der entsprechenden Zielposition geführt wird. Die Anfahrtsroute kann dabei darauf abgestimmt werden, einen möglichst einfachen - z. B. durch geringen Rangierbedarf gekennzeichneten - Einparkvorgang zu ermöglichen. Die Anfahrtsroute kann also beispielsweise so festgelegt werden, dass - bei Rechtsverkehr - ein Einparken auf der rechten Straßenseite möglich ist.

Die Erfindung lässt sich vorteilhaft so weiterbilden, dass das folgende Szenario umsetzbar ist: Das Kraftfahrzeug befindet sich bei dem Szenario in einer strukturierten Umgebung eines Parkplatzzuweisungs-Systems. Die strukturierte Umgebung kann beispielsweise ein durch das Parkplatzzuweisungs-System automatisiertes Parkhaus sein. Innerhalb der strukturierten Umgebung ist die Istposition des Kraftfahrzeugs bestimmbar. Die Istposition kann beispielsweise bestimmt werden mittels geeigneter Sensoren eines Parkhauses. Hierzu kommen insbesondere Kameras in Frage und/oder Funkpeiler, beispielsweise Mobilfunkpeiler, welche beispielsweise ein JPRS-System des Kraftfahrzeuges zur Positionsbestimmung nutzen. Die derart bestimmte Istposition wird an das Kraftfahrzeug übermittelt. Außerdem werden Angaben bezüglich einer möglichen Zielposition, insbesondere bezüglich eines reservierten Parkplatzes, an das Kraftfahrzeug übermittelt. Bei dem Kraftfahrzeug sind nun die wesentlichen geometrischen Verhältnisse, insbesondere Istposition und eine mögliche Zielposition, des durchzuführenden Einparkvorgangs bekannt und der Automatisierungsgrad des Einparkvorgangs kann gegenüber bekannten Parkplatzzuweisungs-Systemen und -verfahren deutlich erhöht werden. Die Zielposition wird als Startwert eines erfindungsgemäßen Verfahrens verwendet, der Bediener muss diese im einfachsten Fall lediglich durch eine Auswahlaktion bestätigen. Gegebenenfalls kann er die Zielposition zunächst auch erfindungsgemäß seinen Wünschen anpassen. Zusätzlich, beispielsweise zum Zweck der Kollisionsvermeidung, können auch Angaben bezüglich des Vorhandenseins sonstiger Fahrzeuge in der Nähe der Zielposition, die den aktuellen Parkvorgang beeinflussen könnten, an das Kraftfahrzeug übermittelt werden.

Bei einer solchen Weiterbildung der Erfindung werden die Anforderung, welche die Ausstattung eines Kraftfahrzeugs erfüllen muss, um mit einem vollautomatischen Parkplatzzuweisungs-System, insbesondere einem automatisierten Parkhaus, kompatibel zu sein, im Wesentlichen auf ein in Software umsetzbares Verfahren beschränkt. Die bei Systemen und Verfahren des Stands der Technik in der Regel durch das Kraftfahrzeug zu erledigenden Aufgaben (Umfelderfassung durch Fahrzeugsensorik und Auswertung der Umfeldsignale in fahrzeuginternen Recheneinheiten) werden auf das Parkplatzzuweisungs-System verlagert. Eine entsprechende Umfeldsensorik des Kraftfahrzeugs sowie deren Auswertung wird also zumindest für Einparkvorgänge in derart strukturierten Umgebungen nicht benötigt und kann daher entfallen.

Durch die Erfindung kann der Bediener visuell kontrollieren, an welcher Position sein Kraftfahrzeug durch den Einparkvorgang geparkt werden soll. Er kann eine - möglicherweise falsch erkannte oder zumindest aus Sicht des Bedieners subjektiv nicht favorisierte - vorgeschlagene Zielposition vor dem Start des Einparkvorgangs bei Bedarf korrigieren bzw. seinen Vorstellungen entsprechend anpassen. Die Veränderung der Zielposition kann der Bediener durch Bedienaktionen erreichen. Durch die Erfindung werden somit die Vorteile einer automatischen Interpretation der Umgebung und einer Bedienung durch den Bediener kombiniert.

Durch die Erfindung können auch die Anforderungen an die Genauigkeit und Zuverlässigkeit eines Parkhilfesystems bzw. der Umfeldsensorik des Kraftfahrzeugs verringert werden. Die Bedien-Interaktion zwischen Fahrer und Kraftfahrzeug, die dem physikalischen Einparkvorgang nach dem Prinzip "What You See is What You Get" vorangeht, impliziert die Möglichkeit der visuellen Kontrolle und die Möglichkeit eines Überstimmens durch den Fahrer. Dadurch wird das Sicherheitsrisiko reduziert, welches gemäß dem Stand der Technik aus einer fehlerhaften automatischen Interpretation der Umgebungsszene und/oder aus Messungenauigkeiten - etwa einer ungenauen Vermessung einer Parklücke - resultieren kann. Die Verfügbarkeit eines Parkhilfesystems, welches nach dem erfindungsgemäßen Verfahren arbeitet, kann daher gegenüber Systemen des Stands der Technik deutlich erhöht werden.

Eine sensorische Vermessung der Fahrzeugumgebung und/oder eine automatische Interpretation der Umgebungsszene kann gegebenenfalls sogar ganz entfallen. Die Wahl einer Zielposition erfolgt dann einzig durch die Bedienaktionen des Bedieners,

Die Erfindung kann neben Einparkvorgängen auch auf andere Rangiervorgänge Anwendung finden.

Eine Vorrichtung in einem Kraftfahrzeug zur Durchführung des erfindungsgemäßen Verfahrens kann als ein Elektroniksystem des Fahrzeuges oder als eine auf mehrere Fahrzeugsysteme verteilte Funktion ausgestaltet werden. Hierdurch können sich Vorteile und Einsparungen ergeben, da beispielsweise bereits vorhandene Sensorik, Rechenleistung oder sonstige Ressourcen optimiert genutzt werden können. Teile des erfindungsgemäßen Systemss können auch außerhalb des Fahrzeuges realisiert werden. Beispielsweise kann die in einem Großparkhaus oder einer Hafenanlage befindliche Sensorik, Rechenkapazität und Vorrichtungen durch drahtlose Informationsübertragung für das erfindungsgemäße System benutzt werden. Dadurch können sich insbesondere Synergien für einen großen Fuhrpark oder Hafen ergeben.

Die Erfindung ist anwendbar auf Einparkvorgänge und sonstige Rangiervorgänge. Zu Gunsten einer klaren Ausdrucksweise wird weitestgehend lediglich auf Einparkvorgänge Bezug genommen. Die Anwendung des beschriebenen Verfahrens zur Steuerung eines zumindest teilautomatisch durchführbaren Rangiervorgangs ist jedoch ebenfalls vom erfinderischen Gedanken umfasst.

Die Erfindung ist anwendbar auf verschiedenste Verkehrsmittel. Zu Gunsten einer klaren Ausdrucksweise wurde weitestgehend lediglich auf Kraftfahrzeuge Bezug genommen. Die Anwendung des beschriebenen Verfahrens auf andere Verkehrsmittel (z.B. Schiffe oder auf dem Boden rangierende Fluggeräte) ist jedoch ebenfalls vom erfinderischen Gedanken umfasst.

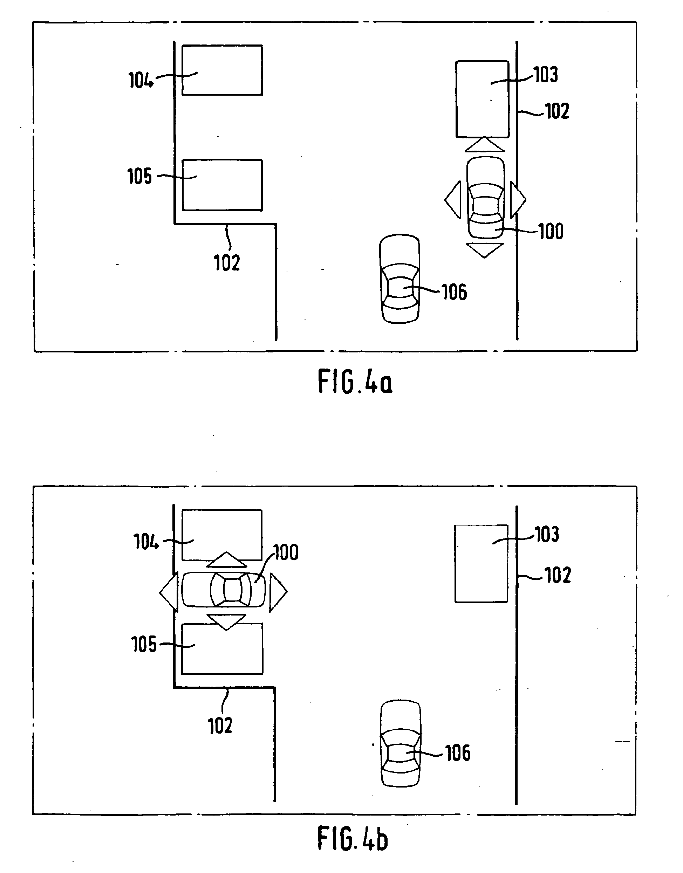

Anhand der beigefügten Zeichnungen werden bevorzugte Ausführungsformen und Weiterbildungen im Folgenden näher beschrieben. Dabei zeigen im Einzelnen
- Fig. 4a: eine erste Ausgabe einer Anzeigeeinheit während der Interaktion eines Bedieners mit einem Parkhilfesystem bei einem ersten Ausführungsbeispiel für ein erfindungsgemäßes Verfahren,
- Fig. 4b: eine zweite Ausgabe einer Anzeigeeinheit während der Interaktion eines Bedieners mit einem Parkhilfesystem bei einem ersten Ausführungsbeispiel für ein erfindungsgemäßes Verfahren,
- Fig. 1: die Ausgabe einer Anzeigeeinheit während der Interaktion eines Bedieners mit einem Parkhilfesystem bei einem zweiten Ausführungsbeispiel für ein erfindungsgemäßes Verfahren,
- Fig. 2a: eine erste Ausgabe einer Anzeigeeinheit während der Interaktion eines Bedieners mit einem Parkhilfesystem bei einem dritten Ausführungsbeispiel für ein erfindungsgemäßes Verfahren,
- Fig. 2b: eine zweite Ausgabe einer Anzeigeeinheit während der Interaktion eines Bedieners mit einem Parkhilfesystem bei einem dritten Ausführungsbeispiel für ein erfindungsgemäßes Verfahren,
- Fig. 3: die Ausgabe einer Anzeigeeinheit während der Interaktion eines Bedieners mit einem Parkhilfesystem bei einem vierten Ausführungsbeispiel für ein erfindungsgemäßes Verfahren.

In allen nachfolgend beschriebenen Ausführungsbeispielen verfügt ein Kraftfahrzeug über ein Parkhilfesystem, mit welchem ein vollautomatischer Einparkvorgang von der Istposition des Kraftfahrzeugs zu einer vorgegebenen Sollposition durchführbar ist. Das Parkhilfesystem umfasst eine als Bildschirm ausgebildete graphische Anzeigeeinheit im Fahrzeuginnenraum. Auf Anforderung des Fahrers kann eine Vermessung der Umgebung des Kraftfahrzeugs durch fahrzeugeigene Sensorik sowie auf Basis der Ergebnisse der Vermessung eine automatische Interpretation der Umgebungsszene ausgelöst werden. Durch die Vermessung und die anschließende Interpretation kann in der Regel eine mögliche Parkposition in der Umgebung der Istposition des Kraftfahrzeugs ausgemacht werden. Da eine derart bestimmte Parkposition jedoch nicht immer diejenige Parkposition ist, welche der Fahrer des Kraftfahrzeugs tatsächlich einnehmen möchte, wird die automatisch bestimmte Parkposition nicht selbsttätig als Sollposition für den vollautomatischen Einparkvorgang übernommen. Stattdessen findet ein erfindungsgemäßes Verfahren Anwendung, um in einem interaktiven Bedienverfahren eine Sollposition für den vollautomatischen Einparkvorgang festzulegen.

Bei einem ersten Ausführungsbeispiel für die Erfindung wird zunächst eine einzige - objektiv optimale - Parkposition durch die automatische Interpretation der Umgebungsszene bestimmt. Diese objektiv optimale Parkposition wird als Startwert einer Zielposition verwendet, welche nachfolgend noch durch den Fahrer verändert werden kann. Ebenso wird die Ausrichtung des Kraftfahrzeugs um seine Hochachse berechnet, welche dieses in der - objektiv optimalen - Parkposition einnehmen sollte. Auch diese wird jedoch nur als Startwert einer Zielausrichtung verwendet und kann nachfolgend noch verändert werden.

Dem Fahrer wird auf dem Bildschirm die Umgebung seines Kraftfahrzeugs aus der Vogelperspektive dargestellt. Fig. 4a zeigt schematisch das zunächst dargestellte Umgebungsbild. Das Umgebungsbild enthält ein Zielobjekt 100, eine Markierung 102 des Straßenverlaufs, verschiedene Umgebungsobjekte, hier andere Fahrzeuge 103, 104, 105 sowie ein Abbild 106 des eigenen Kraftfahrzeugs in der Istposition. Das Zielobjekt 100 hat im Wesentlichen das Erscheinungsbild des Kraftfahrzeugs aus der Vogelperspektive. Zusätzlich umfasst das Zielobjekt 100 Richtungspfeile, die einerseits eine visuelle Unterscheidung vom Abbild 106 in der Istposition ermöglichen und andererseits anzeigen, in welche Richtungen das Zielobjekt 100 bewegt werden kann. In dem in Fig. 4a dargestellten Umgebungsbild befindet sich das Zielobjekt 100 in einer Bildposition, die der als Startwert verwendeten Zielposition entspricht. Die Ausrichtung des Zielobjekts im Umgebungsbild entspricht dem Startwert der Zielausrichtung.

Der Fahrer kann nun durch Betätigung eines im Kraftfahrzeuginneren angeordneten Dreh-Druckstellers die Zielposition sowie die Zielausrichtung verändern. Ein Verschieben des Dreh-/Druckstellers bedingt dabei eine kontinuierliche Verschiebung des Zielobjekts 100 im Umgebungsbild, ein Verdrehen des Dreh-/Druckstellers eine Drehung des Zielobjekts 100 im Umgebungsbild. Der Bediener kann das Zielobjekt 100 auf diese Weise frei im Umgebungsbild verschieben und verdrehen.

Im vorliegenden Beispiel bringt der Bediener das Zielobjekt 100 dadurch in die in Fig. 4b dargestellte Anordnung. Diese entspricht der - subjektiv - vom Bediener gewünschten Parkposition für sein Kraftfahrzeug. Der Fahrer hat das Zielobjekt nun gewissermaßen "virtuell eingeparkt".

Um die eingestellte Zielposition und Zielausrichtung auszuwählen, drückt der Bediener auf den Dreh-/Drucksteller. Das Drücken des Dreh-/Druckstellers wird als Auswahlaktion verstanden. Die eingestellte Zielposition wird als Sollposition, die eingestellte Zielausrichtung wird als Sollausrichtung für den vollautomatischen Einparkvorgang übernommen und dieser wird gestartet.

Bei einem zweiten Ausführungsbeispiel für die Erfindung wird zunächst nicht nur eine, sondern werden zumindest zwei, im vorliegenden Fall genau zwei, mögliche Parkpositionen durch die automatische Interpretation der Umgebungsszene bestimmt. Diese beiden Parkpositionen werden als zwei mögliche Zielpositionen verwendet, von welchen der Fahrer nachfolgend eine einzige auswählen kann. Jeder der beiden möglichen Zielpositionen ist dabei auch eine geeignete Zielausrichtung zugeordnet.

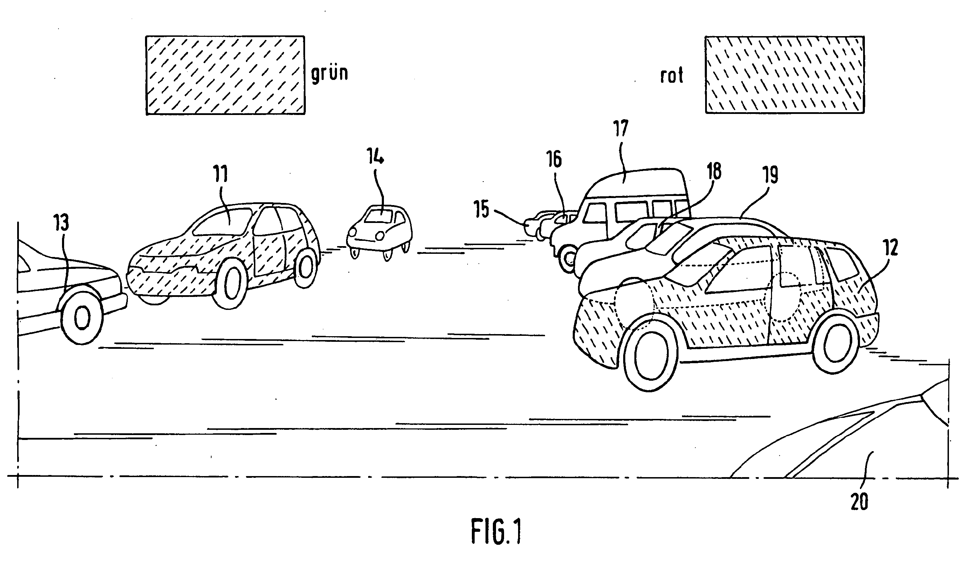

Fig. 1 zeigt eine Bildschirmansicht während der Interaktion des Bedieners mit dem Parkhilfesystem bei dem hier beschriebenen zweiten Ausführungsbeispiel. Die Bildschirmansicht ist im vorliegenden Fall photorealistisch gestaltet. Das dargestellte Umgebungsbild besteht im Wesentlichen aus einem Kamerabild. Das Kamerabild wird in etwa aus dem Blickwinkel des Fahrers des einzuparkenden Kraftfahrzeugs erfasst. In dem Kamerabild sind andere Fahrzeuge 13, 14, 15, 16, 17, 18, 19, 20 zu erkennen.

Zu erkennen sind außerdem zwei virtuelle Kraftfahrzeuge 11, 12 welche halbtransparent in das Umgebungsbild eingeblendet sind. Beide virtuellen Kraftfahrzeuge 11, 12 sind in ihrem Erscheinungsbild dem einzuparkenden Kraftfahrzeug nachempfunden, jedoch im Wesentlichen als Drahtgerüst ausgestaltet und somit im Umgebungsbild leicht als eingeblendete Elemente erkennbar. Das virtuelle Kraftfahrzeug 11 befindet sich in der dargestellten Umgebungsszene an der ersten möglichen Zielposition, welche durch die automatische Interpretation bestimmt wurde, und ist in der zugehörigen Zielausrichtung ausgerichtet. Das virtuelle Kraftfahrzeug 12 befindet sich in der dargestellten Umgebungsszene an der zweiten möglichen Zielposition, welche durch die automatische Interpretation bestimmt wurde, und ist in der zugehörigen Zielausrichtung ausgerichtet.

Die virtuellen Kraftfahrzeuge 11, 12 unterscheiden sich in ihrer farblichen Gestaltung. Das virtuelle Kraftfahrzeug 11 ist zunächst im Wesentlichen grün dargestellt. Diese Farbe macht es für den Fahrer als Zielobjekt im Sinne der Erfindung erkennbar. Das virtuelle Kraftfahrzeug 12 ist zunächst im Wesentlichen rot dargestellt. Diese Farbe macht es für den Fahrer als Alternativzielobjekt erkennbar.

Wieder erfolgt die Bedienung durch den Fahrer über einen Dreh-/Drucksteller, nun aber gegenüber dem ersten Ausführungsbeispiel in sehr eingeschränktem Umfang. Bei dem vorliegenden zweiten Ausführungsbeispiel kann der Fahrer Zielobjekt und Alternativzielobjekt im Umgebungsbild durch ein einfaches Drehen des Dreh-/Druckstellers "vertauschen". Die beiden virtuellen Kraftfahrzeuge 11, 12 verändern dann ihre Farben. Das virtuelle Kraftfahrzeug 12 ist dann im Wesentlichen grün dargestellt und somit als Zielobjekt im Sinne der Erfindung erkennbar. Das virtuelle Kraftfahrzeug 11 ist dann im Wesentlichen rot dargestellt und als Alternativzielobjekt erkennbar. Das Zielobjekt ist somit sprungartig von der Position und Ausrichtung des virtuellen Kraftfahrzeugs 11 in die Position und Ausrichtung des virtuellen Kraftfahrzeugs 12 bewegt worden.

Um die Position und Ausrichtung des virtuellen Kraftfahrzeugs 12 auszuwählen, drückt der Bediener auf den Dreh-/Drucksteller. Das Drücken des Dreh-/Druckstellers wird als Auswahlaktion verstanden. Die Position und Ausrichtung des virtuellen Kraftfahrzeugs 12 - im Sinne der Erfindung Zielposition und Zielausrichtung - werden als Sollposition und Sollausrichtung für den vollautomatischen Einparkvorgang übernommen und dieser wird gestartet.

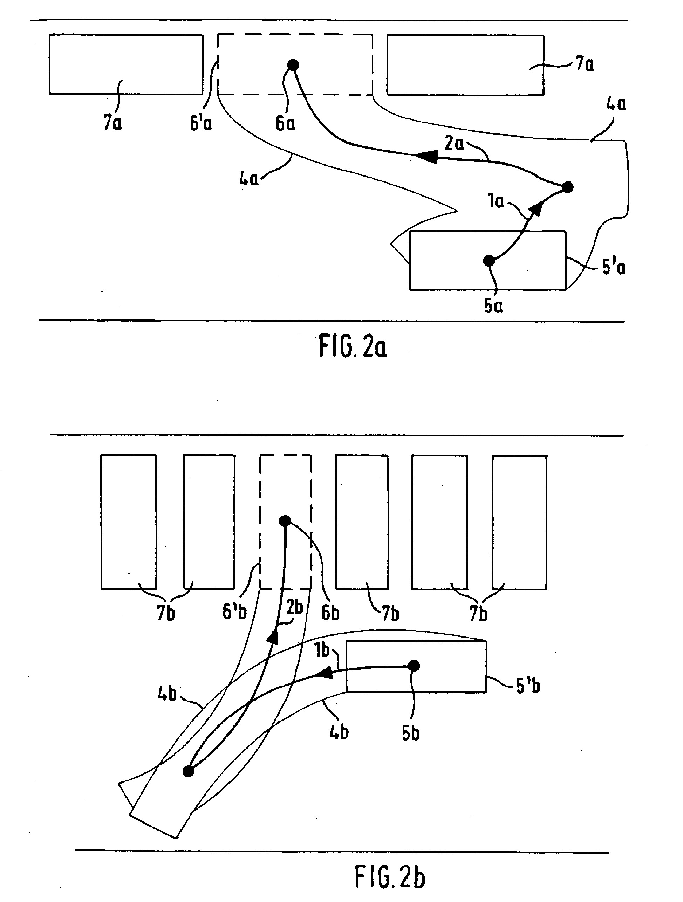

Ein drittes Ausführungsbeispiel für die Erfindung entspricht im Wesentlichen dem ersten Ausführungsbeispiel. Fig. 2a zeigt eine erste Ausgabe des Bildschirms während der Interaktion eines Bedieners mit dem Parkhilfesystem bei dem dritten Ausführungsbeispiel. Dem Bediener wird die Umgebungsszene aus der Vogelperspektive dargestellt. Das dargestellte Umgebungsbild enthält ein Abbild 5'a des eigenen Kraftfahrzeugs in einer der Istposition 5a entsprechenden Bildposition sowie ein Zielobjekt 6'a (dargestellt durch Strichlinien) in einer der Zielposition 6a entsprechenden Bildposition. Ferner enthält das Umgebungsbild andere Fahrzeuge 7a.

Neben der bloßen Anordnung des Zielobjekts in der Umgebungsszene wird dem Bediener beim dritten Ausführungsbeispiel zusätzlich angezeigt, auf welcher Trajektorie ein automatischer Einparkvorgang zu der aktuell eingestellten Zielposition 6a führen würde, sofern die aktuell eingestellte Zielposition 6a als Sollposition für den automatischen Einparkvorgang übernommen würde. Dargestellt sind die Zweige 1a und 2a der Trajektorie, welche im dargestellten Beispiel aus zwei Rangierzügen besteht.

Dargestellt ist ferner der benötigte Rangierraum, welcher begrenzt ist durch Linien 4a. Der Rangierraum ergibt sich im Wesentlichen aus der Fahrzeugbreite und den modellbasiert prognostizierten Lenkwinkeln während des Abfahrens der Trajektorie 1a, 2a. Auch das "Ausschwenken" des Hecks bzw. des Vorderteils des Kraftfahrzeugs ist bei der Berechnung des Rangierraums berücksichtigt.

Fig. 2b zeigt eine zweite Ausgabe des Bildschirms während der Interaktion eines Bedieners mit dem Parkhilfesystem - ebenfalls bei dem dritten Ausführungsbeispiel. Das dargestellte Umgebungsbild enthält wieder ein Abbild 5'b des eigenen Kraftfahrzeugs in einer der Istposition 5b entsprechenden Bildposition sowie ein Zielobjekt 6'b in einer der Zielposition 6b entsprechenden Bildposition. Ferner enthält das Umgebungsbild andere Fahrzeuge 7b. Dargestellt sind außerdem die Zweige 1 b und 2b der Trajektorie, auf welcher ein automatischer Einparkvorgang zu der aktuell eingestellten Zielposition 6b führen würde, sofern diese als Sollposition für den automatischen Einparkvorgang übernommen würde. Durch Linien 4b dargestellt ist außerdem der benötigte Rangierraum.

Auch wenn die Trajektorie des Fahrzeugs sich beim geplanten Rangiermanöver "selbst kreuzt" (wie beispielsweise in Fig 2b dargestellt), ist die Darstellung der Umhüllenden des für alle Teile der Trajektorie gemeinsam erforderlichen Rangierraums von Vorteil. Sie veranschaulicht den gesamten erforderlichen Platz für den gesamten Rangiervorgang

Ein viertes Ausführungsbeispiel veranschaulicht schließlich, wie dem Bediener die Möglichkeit gegeben werden kann, eine Trajektorie aus mehreren möglichen Trajektorien auszuwählen, die zu einer einzigen Zielposition führen.

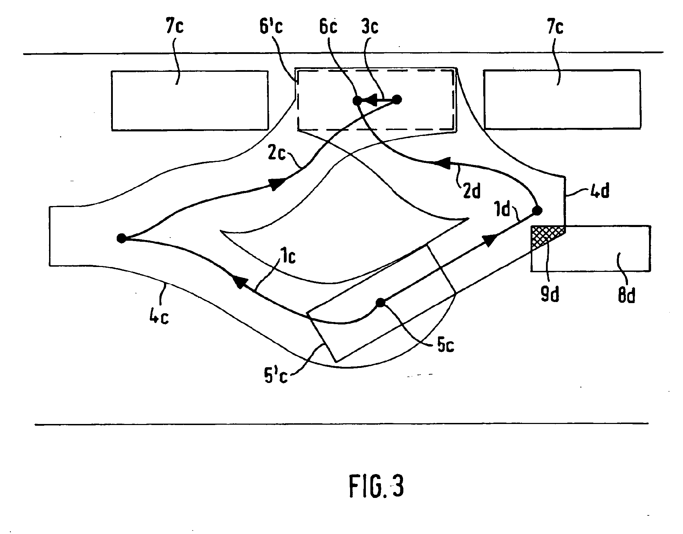

Grundsätzlich ist die Darstellung beim vierten Ausführungsbeispiel ähnlich derjenigen beim dritten Ausführungsbeispiel. Fig. 3 zeigt eine Ausgabe des Bildschirms während der Interaktion eines Bedieners mit dem Parkhilfesystem bei dem vierten Ausführungsbeispiel. Das dargestellte Umgebungsbild enthält ein Abbild 5'c des eigenen Kraftfahrzeugs in einer der Istposition 5c entsprechenden Bildposition sowie ein Zielobjekt 6'c in einer der Zielposition 6c entsprechenden Bildposition. Ferner enthält das Umgebungsbild andere parkende Fahrzeuge 7c. Dargestellt ist wie beim dritten Ausführungsbeispiel eine Trajektorie - bestehend aus drei Zweigen 1 c, 2c, 3c - auf welcher ein automatischer Einparkvorgang zu der aktuell eingestellten Zielposition 6c führen könnte, sofern diese als Sollposition für den automatischen Einparkvorgang übernommen würde. Durch Linien 4c dargestellt ist außerdem der benötigte Rangierraum.

Im Unterschied zum dritten Ausführungsbeispiel wird dem Fahrer beim vierten Ausführungsbeispiel - sofern eine solche durch die automatische Interpretation bestimmt werden kann - eine zweite Trajektorie dargestellt, die zu derselben Zielposition führt. Im Umgebungsbild in Fig. 3 ist dementsprechend ferner auch die Trajektorie mit den beiden Ästen 1d und 2d dargestellt. Auch für diese Trajektorie ist der benötigte Rangierraum, begrenzt durch Linien 4d, visualisiert.

Nach der Auswahl der Zielposition hat der Fahrer nun eine weitere Entscheidung zu treffen. Er kann über entsprechende Bedienelemente - vorzugsweise die bereits zuvor für die Einstellung der Zielposition benutzten - eine der möglichen Trajektorien auswählen. Auf diese Weise wird das Interpretationsvermögen des Fahrers verbessert genutzt. Im vorliegenden Fall war aufgrund technischer Insuffizienzen bei der automatischen Interpretation der Umgebungsszene das Fahrzeug 8d nicht berücksichtigt worden. Demzufolge wurde dem Fahrer die Trajektorie 1d, 2d zur Auswahl gestellt, obwohl diese zu einer Kollision 9d mit dem Fahrzeug 8d führen würde. Durch die Möglichkeit der Auswahl kann der Fahrer, der dies bemerkt, jedoch die Trajektorie 1c, 2c, 3c wählen, die Kollision somit vermeiden und dennoch das Parkhilfesystem einen vollautomatischen Einparkvorgang durchführen lassen.

## Patentansprüche

1. Verfahren zur Steuerung eines zumindest teilautomatisch durchführbaren Einparkvorgangs, durch welchen ein Kraftfahrzeug von einer Istposition (5a, 5b, 5c) in eine Sollposition verbringbar ist, mit den Schritten:
- ein Bild der Umgebung des Kraftfahrzeugs wird durch eine Anzeigeeinheit im Inneren des Kraftfahrzeugs dargestellt,
- in dem Umgebungsbild wird ein virtuelles Zielobjekt (6a', 6b', 6c', 11, 12, 100) dargestellt, dessen Bildposition im Umgebungsbild einer Zielposition (6a, 6b, 6c) für das Kraftfahrzeug in der Umgebung des Kraftfahrzeugs entspricht,
- in Abhängigkeit von Bedienaktionen eines Bedieners des Kraftfahrzeugs wird die Bildposition des Zielobjekts in dem Umgebungsbild verändert
- durch eine Auswahlaktion des Bedieners wird die veränderte Bildposition des Zielobjekts ausgewählt und eine der veränderten Bildposition des Zielobjekts entsprechende veränderte Zielposition für das Kraftfahrzeug wird als Sollposition des Einparkvorgangs übernommen.
**dadurch gekennzeichnet,**
**dass** zumindest einmalig eine automatische Interpretation der Umgebung des einzuparkenden Kraftfahrzeugs durchgeführt wird, um zumindest eine zulässige und/oder bevorzugte Zielposition zu bestimmen,
**dass** durch die automatische Interpretation der Umgebung eine erste und eine zweite zulässige und/oder bevorzugte Zielposition bestimmt werden und
**dass** das Zielobjekt durch eine Bedienaktion ortsdiskret von einer der ersten Zielposition entsprechenden Bildposition zu einer der zweiten Zielposition entsprechenden Bildposition verschoben wird.

2. Verfahren nach Anspruch 1, **dadurch gekennzeichnet,**
**dass** das Zielobjekt (11, 12, 100) graphisch so gestaltet ist, dass es in der Umgebung ein virtuelles Kraftfahrzeug verkörpert.

3. Verfahren nach einem der Ansprüche 1 bis 2, **dadurch gekennzeichnet,**
**dass** das Zielobjekt (11, 12) so gestaltet ist, dass seine Verkörperung in der Umgebung zumindest teilweise deutlich nach oben über die Fahrbahnebene hinausragt.

4. Verfahren nach einem der Ansprüche 1 bis 3, **dadurch gekennzeichnet,**
**dass** das Zielobjekt ganz oder teilweise teiltransparent (11, 12) ausgestaltet ist.

5. Verfahren nach einem der Ansprüche 1 bis 4, **dadurch gekennzeichnet,**
**dass** die graphische Darstellung des Zielobjekts Im Umgebungsbild zumindest teilweise In Abhängigkeit von der lokalen Bildhelligkeit und/oder von Farbwerten der umliegenden Bildpunkte erfolgt.

6. Verfahren nach einem der Ansprüche 1 bis 5, **dadurch** gakennzeichnet,
dass über ein zur Bedienung bzw. Auswahl verwendetes Bedienelement eine unmittelbare haptische Rückmeldung an den Bediener ausgegeben wird und/oder
dass die Bedienaktionen des Bedieners zumindest teilweise auf einen Dreh-/Drucksteller bezogen sind.

7. Verfahren nach einem der Ansprüche 1 bis 6, **dadurch gekennzeichnet,**
**dass** das Umgebungsbild als eine von der relativen Position des Kraftfahrzeugs zur Zielposition abhängige, automatisch gesteuerte Transformation der Fahrzeugumgebung ausgestaltet ist.

8. Verfahren nach einem der Ansprüche 1 bis 7, **dadurch gekennzeichnet,**
**dass** im Umgebungsbild eine zur aktuell eingestellten Zielposition führende Trajektorie (1a, 2a, 1b, 2b, 1c, 2c, 3c, 1d, 2d) und/oder ein erforderlicher Rangierraum (4a, 4b, 4c, 4d) kenntlich gemacht wird.

9. Verfahren nach Anspruch 8, **dadurch gekennzeichnet,**
**dass** dem Bediener die Möglichkeit gegeben wird, zwischen mehreren möglichen Trajektorien (1c, 2c, 3c, 1 d, 2d) zu einer einzigen Zielposition (6c) auszuwählen.

10. Verfahren nach einem der Ansprüche 1 bis 9, **dadurch gekennzeichnet,**
**dass** Angaben zu einer möglichen Zielposition und/oder zur Bestimmung einer Trajektorie mittels drahtloser Kommunikation von einer Datenbank außerhalb des Kraftfahrzeuges bezogen werden.

## Claims

1. A method for controlling an at least partially automatically executable parking process, by means of which a motor vehicle can be brought from an actual position (5a, 5b, 5c) into a desired position, comprising the steps:
- an image of the surroundings of the motor vehicle is shown by a display unit in the interior of the motor vehicle,
- a virtual target object (6a', 6b', 6c', 11, 12, 100) is shown in the image of the surroundings, the image position of which in the image of the surroundings corresponds to a target position (6a, 6b, 6c) for the motor vehicle in the surroundings of the motor vehicle,
- depending on operating actions of an operator of the motor vehicle, the image position of the target object in the image of the surroundings is changed,
- by means of a selection action of the operator, the changed image position of the target object is selected and a changed target position for the motor vehicle corresponding to the changed image position of the target object is adopted as the desired position of the parking process,
**characterised in that** an automatic interpretation of the surroundings of the motor vehicle to be parked is carried out at least once in order to determine at least an admissible and/or preferred target position, **in that** a first and a second admissible and/or preferred target position are determined by the automatic interpretation of the surroundings and **in that** the target object is displaced by an operating action, in a location-discrete manner, from an image position corresponding to the first target position to an image position corresponding to the second target position.

2. A method according to claim 1, **characterised in that** the target object (11, 12, 100) is graphically designed such that it embodies a virtual motor vehicle in the surroundings.

3. A method according to any one of claims 1 to 2, **characterised in that** the target object (11, 12) is designed such that its embodiment in the surroundings projects, at least partially, clearly upwardly above the road plane.

4. A method according to any one of claims 1 to 3, **characterised in that** the target object is completely or partially partly transparent (11, 12).

5. A method according to any one of claims 1 to 4, **characterised in that** the graphic display of the target object in the image of the surroundings takes place at least partially depending on the local image brightness and/or colour values of the surrounding pixels.

6. A method according to any one of claims 1 to 5, **characterised in that** a direct haptic feedback to the operator is emitted by means of an operating element used for operation or selection and/or **in that** the operating actions of the operator are at least partially related to a rotary/pressure adjuster.

7. A method according to any one of claims 1 to 6, **characterised in that** the image of the surroundings is configured as an automatically controlled transformation of the vehicle surroundings, depending on the relative position of the motor vehicle with respect to the target position.

8. A method according to any one of claims 1 to 7, **characterised in that** a trajectory (1a, 2a, 1b, 2b, 1 c, 2c, 3c, 1 d, 2d) leading to the currently adjusted target position and/or a required manoeuvring space (4a, 4b, 4c, 4d) is made recognisable in the image of the surroundings.

9. A method according to claim 8, **characterised in that** the operator is provided with the possibility of selecting between a plurality of possible trajectories (1c, 2c, 3c, 1d, 2d) to a single target position (6c).

10. A method according to any one of claims 1 to 9, **characterised in that** details on a possible target position and/or to determine a trajectory are obtained by means of wireless communication from a database outside the motor vehicle.

## Revendications

1. Procédé de commande d'une manoeuvre de rangement dans un emplacement de stationnement effectuée au moins de manière semi-automatique, selon lequel un véhicule automobile est guidé d'une position réelle (5a, 5b, 5c) dans une position de consigne,
procédé comprenant les étapes suivantes :
- représenter à l'intérieur du véhicule une image de l'environnement du véhicule à l'aide d'une unité d'affichage,
- représenter dans l'image de l'environnement un objet cible virtuel (6a', 6b', 6c', 11, 12, 100) dont la position d'image dans l'image de l'environnement correspond à une position cible (6a, 6b, 6c) du véhicule dans l'environnement du véhicule,
- modifier en fonction des actions du conducteur du véhicule, la position de l'image de l'objet cible dans l'image de l'environnement,
- une sélection par le conducteur sélectionne la position modifiée de l'image de l'objet cible et une position cible, modifiée, correspondant à la position modifiée de l'image de l'objet cible pour le véhicule, sera prise comme position de consigne pour la manoeuvre de rangement,
procédé **caractérisé en ce qu'**
- au moins une fois on effectue une interprétation automatique de l'environnement du véhicule à ranger pour définir au moins une position cible autorisée et/ou préférentielle,
- par l'interprétation automatique de l'environnement, on définit une première et une seconde cible autorisées et/ ou préférentielles, et
- on déplace l'objet cible par l'action de l'opérateur, de manière localement discrète, en passant d'une position de l'image correspondant à la première position cible vers une position d'image correspondant à la seconde position cible.

2. Procédé selon la revendication 1,
**caractérisé en ce que**
l'objet cible (11, 12, 100) est conçu graphiquement pour représenter un véhicule virtuel dans l'environnement.

3. Procédé selon l'une des revendications 1 et 2,
**caractérisé en ce que**
l'objet cible (11, 12) est conçu pour que sa matérialisation dans l'environnement dépasse au moins en partie de manière significative vers le haut par rapport au plan de la chaussée.

4. Procédé selon l'une des revendications 1 à 3,
**caractérisé en ce que**
l'objet cible est conçu totalement ou partiellement transparent (11, 12).

5. Procédé selon l'une des revendications 1 à 4,
**caractérisé en ce que**
la représentation graphique de l'objet cible dans l'image de l'environnement est faite au moins en partie en fonction de la luminosité locale et/ou des valeurs de teinte des points image environnants.

6. Procédé selon l'une des revendications 1 à 5,
**caractérisé en ce que**
par un élément de service utilisé pour le service ou la sélection, on assure un message en retour, haptique, direct, à l'utilisateur et/ou les actions de l'utilisateur se rapportent au moins en partie à un actionneur tournant/poussoir.

7. Procédé selon l'une des revendications 1 à 6,
**caractérisé en ce que**
l'image de l'environnement est conçue comme une transformation de l'environnement du véhicule, commandée automatiquement, en fonction de la position relative du véhicule par rapport à la position cible.

8. Procédé selon l'une des revendications 1 à 7,
**caractérisé en ce que**
dans l'image de l'environnement, on met en évidence une trajectoire (1a, 2a, 1b, 2b, 1c, 2c, 3c, 1d, 2d) conduisant à la position cible réglée actuellement et/ou à un espace de rangement nécessaire (4a, 4b, 4c, 4d).

9. Procédé selon la revendication 8,
**caractérisé en ce qu'**
on donne la possibilité à l'utilisateur de sélectionner entre plusieurs trajectoires possibles (1c, 2c, 3c, 1d, 2d) vers une unique position cible (6c).

10. Procédé selon l'une des revendications 1 à 9,
**caractérisé en ce que**
les indications relatives à une position cible possible et/ou pour déterminer une trajectoire sont obtenues par une communication sans fil avec une banque de données extérieure au véhicule.
